# FASCICULE DE BREVET EUROPEEN

(11) **EP 4 041 573 B1**
(45) Date de publication et mention de la délivrance du brevet: **29.11.2023**
(21) Numéro de dépôt: 20793768.1
(22) Date de dépôt: 08.10.2020
(51) Int. Cl.: B60C 1/00, C08F 236/10, C08L 13/00, C08L 65/00, C08K 3/36, C08K 5/17

(54) **COMPOSITION DE CAOUTCHOUC COMPRENANT UN ELASTOMERE DIENIQUE COMPRENANT DES FONCTIONS CARBONATES**
KAUTSCHUKZUSAMMENSETZUNG, DIE EIN DIENELASTOMER MIT FUNKTIONELLEN CARBONATGRUPPEN AUFWEIST
RUBBER COMPOSITION CONTAINING A DIENE ELASTOMER HAVING CARBONATE FUNCTIONAL GROUPS

(30) Priorité: 10.10.2019 FR 1911277
(43) Date de publication de la demande: 17.08.2022
(73) Titulaire: COMPAGNIE GENERALE DES ETABLISSEMENTS MICHELIN, 63000 Clermont-Ferrand (FR)
(72) Inventeur: GANDER, Sophie, 63040 CLERMONT-FERRAND Cedex 9 (FR); JASSELIN, Adeline, 63040 CLERMONT-FERRAND Cedex 9 (FR); SCHNELL, Benoit, 2540 GRENCHEN (CH); JEAN-BAPTISTE-DIT-DOMINIQUE, François, 63040 CLERMONT-FERRAND Cedex 9 (FR)
(74) Mandataire: M.F.P. Michelin
(86) Numéro de dépôt international: PCT/FR2020/051774
(87) Numéro de publication internationale: WO 2021/069841

(56) Documents cités:
- FR-A1- 3 053 974
- US-A1- 2010 317 800

## Description

### Domaine technique

Le domaine de la présente invention est celui des compositions de caoutchouc diénique, en particulier des compositions de caoutchouc diénique comprenant un système de réticulation autre qu'un système de vulcanisation.

### Technique antérieure

Idéalement, une composition de caoutchouc destinée à être utilisée dans un pneu doit obéir à un grand nombre d'exigences techniques. L'une d'entre elles est la cohésion de la composition de caoutchouc. Une bonne cohésion d'une composition de caoutchouc se traduit généralement par un bon niveau de renforcement de la composition de caoutchouc. D'autres exigences techniques concernent les propriétés à rupture, notamment aux grandes déformations, qui peuvent refléter les propriétés d'endurance du pneu par exemple et ainsi jouer sur la durée de vie.

Le renforcement d'une composition de caoutchouc peut être amélioré en introduisant dans la composition de caoutchouc des charges renforçantes, d'éventuels agents de couplage destinés à coupler le caoutchouc et la charge renforçante ou encore des élastomères fonctionnels. Parmi les élastomères fonctionnels connus pour améliorer le renforcement d'une composition de caoutchouc, on peut citer les élastomères portant par exemple des fonctions silanol, alcoxysilane, acide carboxylique. La Demanderesse a décrit dans le document FR 3053974 une composition de caoutchouc contenant un élastomère diénique fonctionnel portant des fonctions carbonates présentes chacune dans un cycle 1,3-dioxolan-2-one dans le but d'améliorer le renforcement de la composition comprenant de la silice comme charge renforçante. La matrice élastomérique de cette composition est vulcanisée au soufre.

Les compositions à base d'un système de vulcanisation classique à base de soufre sont souvent complexes car comprennent en plus du soufre, ou d'un agent donneur de soufre, des accélérateurs de vulcanisation, des activateurs, et éventuellement des retardateurs de vulcanisation.

En vue de simplifier les compositions et leur préparation, la Demanderesse a proposé par le passé des compositions de caoutchouc comprenant des élastomères diéniques portant des fonctions époxy servant de points d'ancrage à la réticulation au moyen de systèmes de réticulation aussi performants que les systèmes de vulcanisation conventionnels. Ainsi, par exemple, les documents WO2014095582, WO2014095583, WO2014095585 et WO2014095586 décrivent de telles compositions de caoutchouc pour pneu comprenant des polyacides carboxyliques combinés à des composés imidazoles comme systèmes de réticulation.

Par ailleurs, il est connu que des résines portant des fonctions carbonates ou thio carbonates peuvent être réticulés par des agents de réticulation de type polyamine comme décrit par exemple dans les documents JP2016180049 et JP2005120231 et WO 2013182814A1.

Il est toujours nécessaire d'améliorer les propriétés des compositions de caoutchouc qui entrent dans la fabrication des pneus afin d'améliorer les performances de ces derniers. Toutefois les compositions qui constituent le pneu doivent généralement répondre à un compromis de propriétés parfois antinomiques. Par exemple, lorsque les propriétés d'extensométrie sont améliorées, c'est-à-dire lorsque la déformation et la contrainte à la rupture augmentent, cela s'accompagne souvent d'une diminution de la rigidité notamment aux moyennes déformations. Aussi est-il un objectif permanent des concepteurs de compositions de caoutchouc de veiller à ce que l'amélioration de certaines propriétés ne se fasse pas au détriment d'autres.

L'objectif que ce sont fixés les Inventeurs est de disposer de compositions de caoutchouc utilisables pour la fabrication de pneus, simples de préparation et qui présentent de bonnes propriétés d'extensométrie tout en maintenant un bon niveau de renforcement et de rigidité.

### Exposé de l'invention

Les Inventeurs ont découvert que l'utilisation dans une composition de caoutchouc d'un élastomère diénique portant des fonctions carbonates présentes chacune dans des cycles 1,3-dioxolan-2-one ainsi que d'un système de réticulation à base d'une polyamine, en présence d'une résine terpène phénolique, présentent de bonnes propriétés d'extensométrie tout en maintenant un bon niveau de renforcement et de rigidité.

### Résumé de l'invention

Ainsi un premier objet de l'invention est une composition de caoutchouc contenant au moins
- une charge renforçante comprenant de la silice,
- un élastomère comprenant des unités d'un monomère 1,3-diène et portant des fonctions carbonates présentes chacune dans un cycle 1,3-dioxolan-2-one, et
- un système de réticulation comprenant un composé polyamine et
- une résine terpène phénolique.

De préférence, la composition selon l'invention comprend un élastomère comprenant des unités d'un monomère 1,3-diène et portant des fonctions carbonates présentes chacune dans un cycle 1,3-dioxolan-2-one, lesquelles fonctions carbonates sont pendantes et situées en dehors des extrémités de chaîne de l'élastomère.

De préférence, la composition selon l'invention comprend un élastomère comprenant des unités d'un monomère 1,3-diène et portant des fonctions carbonates présentes chacune dans un cycle 1,3-dioxolan-2-one dont le taux de fonctions carbonates est compris entre 0.1 et 20 moles pour 100 moles d'unités monomères constituant l'élastomère.

De préférence, la composition selon l'invention comprend un élastomère comprenant des unités d'un monomère 1,3-diène et portant des fonctions carbonates présentes chacune dans un cycle 1,3-dioxolan-2-one dont le monomère 1,3-diène est le 1,3-butadiène, l'isoprène ou leur mélange, de préférence le 1,3-butadiène.

De préférence, la composition selon l'invention comprend un élastomère comprenant des unités d'un monomère 1,3-diène et portant des fonctions carbonates présentes chacune dans un cycle 1,3-dioxolan-2-one, ainsi que des unités d'un monomère vinylaromatique, de préférence le styrène.

De préférence, le composé polyamine du système de réticulation de la composition selon l'invention est un composé polyamine comprenant au moins deux fonctions amines, de préférence deux fonctions amines, liées entre elles par des liaisons covalentes ou par des groupements hydrocarbonés aliphatiques ou aromatiques ou groupements hydrocarbonés en partie aliphatiques et aromatiques, comprenant éventuellement un ou plusieurs hétéroatomes et dont les fonctions amines sont primaires ou secondaires, de préférence des fonctions amines primaires.

De préférence, le groupement hydrocarboné liant deux fonctions amines du composé polyamine est un oligomère ayant une masse moléculaire moyenne en nombre Mn d'au plus 1500g/mol, plus préférentiellement d'au plus 1000 g/mol.

De préférence, la composition selon l'invention comprend un composé polyamine selon un taux allant de 0,2 à 20 pce.

De préférence, la composition selon l'invention comprend un composé polyamine répondant à la formule générale (VI)

RRN --- A --- NRR

dans laquelle
A représente une liaison covalente ou un groupement hydrocarboné comportant au moins 1 atome de carbone, éventuellement substitué et éventuellement interrompu par un ou plusieurs hétéroatomes,
les R représentent, indépendamment l'un de l'autre, un atome d'hydrogène ou un groupement alkyle comportant au moins 1 atome de carbone.

De préférence, la composition selon l'invention comprend une charge renforçante comprenant plus de 50% en poids de silice par rapport au poids total de la charge.

De préférence, la composition selon l'invention comprend une résine terpène phénolique majoritairement constituée d'unités issues de monomères terpènes et phénols.

De préférence, la composition selon l'invention comprend une résine terpène phénolique présente selon un taux d'au moins 0,5 pce et d'au plus 50 pce.

L'invention concerne aussi un pneu qui comprend la composition de caoutchouc conforme à l'invention.

### Description détaillée

Dans la présente description, sauf indication expresse différente, tous les pourcentages (%) indiqués sont des % en poids. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

Dans la présente demande, on entend par fonction carbonate le groupe de formule -O(C=O)O-. La fonction carbonate utile aux besoins de l'invention se trouve dans une structure cyclique, puisqu'elle est présente sous la forme du cycle 1,3-dioxolan-2-one.

Dans la présente demande, on entend par unité monomère 1,3-diène, une unité qui résulte de l'insertion d'un monomère 1,3-diène dans une chaîne polymère en croissance. De façon connue, les unités d'un monomères 1,3-diène peuvent résulter d'une insertion 1,2 ou 1,4 du monomère 1,3-diène dans la chaîne polymère. Dans le cas d'une insertion 1,4, elles peuvent se présenter sous la configuration cis ou trans.

Dans la présente demande, le mot (méth)acrylate désigne indifféremment acrylate et méthacrylate.

Dans la présente description, l'expression « pendant » relatif à la fonction carbonate est utilisé dans le même sens que le terme « pendant » utilisé dans la définition de « groupe pendant » donnée par IUPAC, PAC, 1996, 68, 2287.

### 1. Composition de caoutchouc de l'invention

### 1.1. Elastomère diénique portant des fonctions carbonates présentes chacune dans un cycle 1,3-dioxolan-2-one

L'élastomère utile aux besoins de l'invention comprend des unités d'un monomère 1,3-diène. A titre de monomère 1,3-diène, on peut citer ceux ayant 4 à 8 atomes de carbone, comme par exemple le 1,3-butadiène, le 2,3-diméthyl-1,3-butadiène, l'isoprène, le pipérylène. Conviennent également leurs dérivés halogénés, comme par exemple le chloroprène. Le monomère 1,3-diène peut aussi consister en un mélange de ces monomères, auquel les unités monomères 1,3-diène sont constituées des unités monomères de chacun des monomères composant le mélange. De préférence, le 1,3-diène est le 1,3-butadiène, l'isoprène ou leur mélange. De manière plus préférentielle, le 1,3-diène est le 1,3-butadiène.

L'élastomère utile aux besoins de l'invention porte des fonctions carbonates qui sont présentes chacune dans un cycle 1,3-dioxolan-2-one.

De préférence, les fonctions carbonates sont pendantes. De préférence encore, les fonctions carbonates sont pendantes et situées en dehors des extrémités de chaîne de l'élastomère. En particulier, la position pendante des fonctions carbonates rend les fonctions carbonates plus accessibles aux fonctions chimiques de l'agent de réticulation polyamine, ce qui favorise la réticulation des chaînes élastomères et donc la rigidité du matériau.

Selon un mode de réalisation de l'invention, les fonctions carbonates peuvent être introduites par modification chimique d'un polymère. Elles peuvent par exemple être greffées le long d'un élastomère comprenant des unités monomères 1,3-diène. Ainsi, les fonctions carbonates peuvent être présentes dans des composés au moins substitués par un groupe contenant un cycle 1,3-dioxolan-2-one et une fonction réactive avec l'élastomère. On peut envisager différents types de chimie connus de l'homme du métier pour le greffage de fonctions sur des élastomères diénique, portant ou non des fonctions réactives avec le composé de greffage. A titre d'exemple, on peut citer le greffage par l'intermédiaire d'un composé comprenant un groupe contenant un cycle 1,3-dioxolan-2-one et une fonction capable de former une addition dipolaire [1,3] sur une liaison carbone-carbone insaturée, par exemple un oxyde de nitrile, une nitrone, un nitrile imine.

Selon un autre mode de réalisation de l'invention, les fonctions carbonates peuvent être introduites par copolymérisation avec au moins un monomère diénique formant les unités monomères 1,3-diène. Ainsi, les fonctions carbonates peuvent être présentes dans des unités monomères d'un monomère vinylique au moins substitué par un groupe contenant un cycle 1,3-dioxolan-2-one.

Le monomère vinylique est préférentiellement un monomère vinylique contenant le groupe 2-oxo-1,3-dioxolan-4-yle de formule (I).

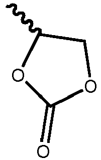

L'homme du métier comprend que le symbole 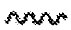 utilisé dans la formule (I) représente un rattachement du CH du cycle au monomère vinylique .

De manière plus préférentielle, le monomère vinylique présente le motif CH₂=C<. La présence de ce motif dans le monomère vinylique favorise la copolymérisation du monomère vinylique avec le 1,3-diène dans la synthèse de l'élastomère utile aux besoins de l'invention.

Selon un mode de réalisation particulier, le monomère vinylique est un monomère (méth)acrylate de formule (II). Le monomère vinylique peut être aussi un mélange de (méth)acrylate de formule (II) qui se différencient les uns des autres par les groupes R₁ ou R₂. 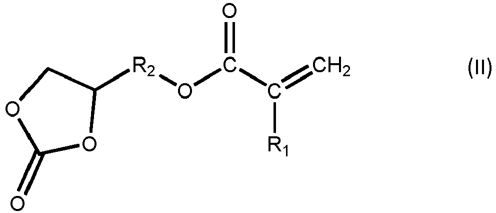 dans laquelle
R₁ est un hydrogène ou un méthyle,
R₂ est une chaîne hydrocarbonée pouvant être interrompue ou substituée par un ou plusieurs hétéroatomes.

De préférence, le monomère (méth)acrylate de formule (II) est choisi dans le groupe constitué par les composés de formule (III), (IV), (V) et leurs mélanges.

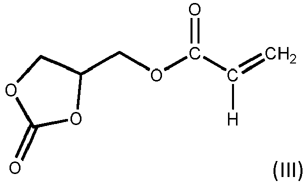

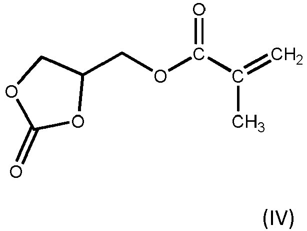

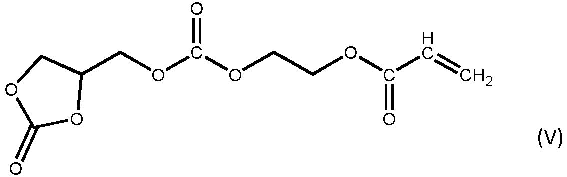

De manière plus préférentielle, le monomère (méth)acrylate de formule (II) est le composé de formule (III), le composé de formule (IV) ou leur mélange.

Selon cet autre mode de réalisation de l'invention, la fonction carbonate peut être apportée le long de la chaîne de l'élastomère par polymérisation radicalaire d'un mélange monomère comprenant au moins le 1,3-diène et le monomère vinylique au moins substitué par un groupe contenant un cycle 1,3-dioxolan-2-one. Ce mode de synthèse est décrit dans le document FR3053974.

Le taux de fonctions carbonates est compris de préférence entre 0.1 et 20 moles pour 100 moles d'unités monomères constituant l'élastomère utile aux besoins de l'invention. En deçà de la valeur de 0.1, la densité pontale après réticulation des chaînes élastomères est insuffisante pour fournir une rigidité satisfaisante au matériau en fonction de son utilisation. Au-delà de la valeur de 20, la rigidification de la composition polymère peut être jugée trop forte pour certains composants caoutchouteux du pneu qui doivent être suffisamment déformables par exemple pour amortir des chocs. Pour certaines applications, le taux de fonctions carbonates est plus préférentiellement compris entre 0.1 et 5 moles pour 100 moles d'unités monomères constituant l'élastomère utile aux besoins de l'invention.

Selon un mode de réalisation de l'invention, l'élastomère utile aux besoins de l'invention contient aussi des unités d'un monomère vinylaromatique. Comme monomère vinylaromatique conviennent par exemple le styrène et les composés aromatiques comportant une double liaison polymérisable par voie radicalaire, comme par exemple les composés issus de l'alkylation du styrène, de l'halogénation du styrène, de l'haloalkylation du styrène et les dérivés éthers du styrène. De préférence, le monomère vinylaromatique est le styrène.

Selon ce mode de réalisation particulier de l'invention, les unités du monomère vinylaromatique représentent préférentiellement moins de 45%, plus préférentiellement moins de 35% en masse de l'élastomère utile aux besoins de l'invention.

Selon une variante préférentielle de l'invention, l'élastomère utile aux besoins de l'invention est un copolymère d'au moins un 1,3-diène et un monomère vinylique au moins substitué par un groupe contenant un cycle 1,3-dioxolan-2-one, le 1,3-diène et le monomère vinylique étant définis selon l'un quelconque des modes de réalisation de l'invention.

Selon une deuxième variante préférentielle de l'invention, l'élastomère utile aux besoins de l'invention est un terpolymère d'un 1,3-diène, d'un monomère vinylique au moins substitué par un groupe contenant un cycle 1,3-dioxolan-2-one et d'un monomère vinylaromatique, le 1,3-diène, le monomère vinylique et le monomère vinylique étant définis selon l'un quelconque des modes de réalisation de l'invention

### 1.2. Système de réticulation

A l'élastomère diénique portant des fonctions carbonates présentes chacune dans un cycle 1,3-dioxolan-2-one précédemment décrit est associé un système de réticulation, apte à réticuler les chaînes élastomères de la composition du pneu selon l'invention. Ce système de réticulation comprend un (c'est-à-dire au moins un) composé polyamine à titre d'agent de réticulation.

Le composé polyamine est un composé possédant au moins deux fonctions amines, de préférence il possède deux fonctions amines. Les fonctions amines sont liées entre elles par des groupements hydrocarbonés aliphatiques ou des groupements hydrocarbonés aromatiques ou des groupements hydrocarbonés en partie aliphatiques et en partie aromatiques, éventuellement interrompus par un ou plusieurs hétéroatomes. Le groupement hydrocarboné peut être un polymère, préférentiellement alors un oligomère ayant de préférence une masse moyenne en nombre Mn ne dépassant pas 1500 g/mol, plus préférentiellement pas plus de 1000 g/mol. Le groupement hydrocarboné peut être un oligomère éventuellement interrompu par un ou plusieurs hétéroatomes, tel que l'oxygène. Parmi les polyamines selon l'invention on peut citer les polyamines dont le groupement hydrocarboné est un polyéther, un polyalkylène, notamment un polyméthylène, ... etc.

Dans le composé polyamine, les fonctions amines sont de préférence des amines primaires ou des amines secondaires, plus préférentiellement des amines primaires.

Le composé polyamine utile aux besoins de l'invention peut être représenté par la formule générale (VI) :

RRN-A-NRR

dans laquelle
A représente un groupement hydrocarboné comportant au moins 1 atome de carbone, éventuellement substitué et éventuellement interrompu par un ou plusieurs hétéroatomes,
les R représentent, indépendamment l'un de l'autre, un atome d'hydrogène ou un groupement alkyle comportant au moins 1 atome de carbone.

De préférence, dans le composé de formule générale (I), A représente un groupement divalent hydrocarboné comportant au moins 2 atomes de carbone, de préférence encore au moins 5.

De préférence, lorsque A représente un groupement divalent hydrocarboné, A représente un groupement divalent hydrocarboné comportant au plus 60 atomes de carbone, de préférence au plus 30 atomes de carbone.

Préférentiellement également, dans le composé de formule générale (I), A est un groupement hydrocarboné divalent de type aliphatique ou un groupement hydrocarboné divalent de type aromatique ou un groupement divalent comportant au moins une partie aliphatique et une partie aromatique. De préférence, A est un groupement divalent de type aliphatique ou un groupement divalent comportant au moins une partie aliphatique et une partie aromatique.

Selon un mode de réalisation, dans le composé de formule générale (I), A peut être interrompu par au moins un hétéroatome choisi parmi l'oxygène, l'azote et le soufre, de préférence l'oxygène.

Selon un mode de réalisation, dans le composé de formule générale (I), A peut être substitué par au moins un radical choisi parmi les radicaux alkyle, cycloalkyle, aryle, aralkyle, hydroxyle, alkoxy, et carbonyle. Ces radicaux sont définis comme: alkyle ayant de 1 à 20 atomes de carbone, de préférence de 1 à 12 atomes de carbone, cycloalkyle ayant de 5 à 24 atomes de carbone, aryle ayant de 6 à 30 atomes de carbone et aralkyle ayant de 7 à 25 atomes de carbone.

Selon un mode de réalisation, le composé de formule générale (I) peut comporter plus de deux fonctions amines, dans ce cas A est substitué par une ou plusieurs fonctions amines de formule -NRR et/ou par un ou plusieurs radicaux hydrocarbonés choisi parmi les radicaux alkyle, cycloalkyle, cycloalkyle, aryle, aralkyle, eux-mêmes substitués par une ou plusieurs fonctions amines de formule -NRR. Ces radicaux sont définis comme: alkyle ayant de 1 à 20 atomes de carbone, de préférence de 1 à 12 atomes de carbone, cycloalkyle ayant de 5 à 24 atomes de carbone, aryle ayant de 6 à 30 atomes de carbone et aralkyle ayant de 7 à 25 atomes de carbone.

Selon un mode de réalisation préférentiel, A ne comporte pas d'autre fonction amine. Le composé polyamine est alors un composé diamine.

Selon un autre mode de réalisation préférentiel, dans le composé de formule générale (I), A est un groupement divalent de type aliphatique interrompu par au moins un atome d'oxygène, plus préférentiellement ne comportant pas d'autre fonction amine.

Les modes de réalisation décrits ci-dessus peuvent être concomitants ou alternatifs, notamment en fonction de leur compatibilité.

De préférence dans le composé de formule générale (I), les R représentent, indépendamment l'un de l'autre, un atome d'hydrogène ou un groupement alkyle ayant de 1 à 20 atomes de carbone, de préférence 1 à 12 atomes de carbone, cycloalkyle ayant de 5 à 24 atomes de carbone, aryle ayant de 6 à 30 atomes de carbone ou aralkyle ayant de 7 à 25 atomes de carbone. Plus préférentiellement, les R représentent un atome d'hydrogène ou un groupement alkyle ayant de 1 à 4 atomes de carbone, plus préférentiellement encore chaque atome d'azote, indépendamment de l'autre, est substitué par un atome d'hydrogène et un groupement alkyle ayant de 1 à 4 atomes de carbone ou par deux atomes d'hydrogène. Plus préférentiellement encore, tous les R représentent un atome d'hydrogène.

Les modes de réalisation et aspects préférentiels concernant les définitions de A et R sont combinables entre eux.

Des composés polyamines utiles aux besoins de l'invention sont disponibles dans le commerce.

Par exemple, à titre de composés polyamines disponibles dans le commerce et utiles aux besoins de l'invention, on peut citer : l'éthylènediamine, la Jeffamine^{®} ED-600, une polyétheramine de la société HUNTSMAN, la 1,3-cyclohexanediamine et la para-xylène diamine, diamines de la société ABCR, ...etc.

Le taux de composé polyamine est préférentiellement d'au moins 0,2 pce. En dessous de 0,2 pce de composé polyamine, l'effet de la réticulation peut ne pas être suffisamment sensible. Le taux de composé polyamine est également préférentiellement d'au plus 20 pce, de préférence au plus 10 pce. Au-delà de 20 pce de composé polyamine, l'interaction gomme-charge peut être pénalisée ou encore la polyamine en excès, n'ayant pas réagi, peut agir comme un plastifiant et réduire la rigidité de la composition. Le taux de composé polyamine est encore préférentiellement compris dans un domaine allant de 0,2 à 20 pce, de préférence de 0,2 à 10 pce.

### 1.3. Charge renforçante

La composition de caoutchouc selon l'invention comprend une charge renforçante comprenant de la silice. En complément, d'autres charges renforçantes peuvent être utilisées, telles que le noir de carbone ou une autre charge inorganique renforçante.

L'état physique sous lequel se présente la silice est indifférent, que ce soit sous forme de poudre, de microperles, de granulés, de billes ou toute autre forme densifiée appropriée.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m2/g, de préférence comprises dans un domaine allant de 30 à 400 m2/g, notamment de 60 à 300 m2/g.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil^{®} 5000GR », « Ultrasil^{®} 7000GR » de la société Evonik, les silices « Zeosil^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Comme autre charge inorganique renforçante, on doit entendre ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneus. De manière connue, certaines charges inorganiques renforçantes peuvent se caractériser notamment par la présence de groupes hydroxyle (-OH) à leur surface. Comme autre charges inorganiques renforçantes conviennent notamment des charges minérales du type siliceux (autre que la silice) ou du type alumineux, en particulier l'alumine (Al₂O₃).

Comme noirs de carbone conviennent tous les noirs de carbone, notamment les noirs conventionnellement utilisés dans les pneus ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un mélange maître (voir par exemple demandes WO97/36724-A2 ou WO99/16600-A1).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,2]. En outre, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

De manière préférentielle, le taux de charge renforçante totale est d'au moins 30 pce, de préférence d'au moins 40 pce, et d'au plus 180 pce. En deçà de 30 pce, le renforcement de la composition de caoutchouc peut s'avérer insuffisant pour apporter un niveau de cohésion adéquat du composant caoutchouteux du pneu comprenant cette composition. De manière encore plus préférentielle, le taux de charge renforçante totale est d'au moins 50 pce. De manière préférentielle, le taux de charge renforçante totale est d'au plus 180 pce, de préférence d'au plus 160 pce. Au-delà de 180 pce, il existe un risque d'augmentation de l'hystérèse et donc de la résistance au roulement des pneus. Pour cette raison, le taux de charge renforçante totale est de préférence dans un domaine allant de 30 à 180 pce, plus préférentiellement de 40 pce à 180 pce, de manière encore plus préférentielle dans un domaine allant 50 à 160 pce. L'une quelconque de ces plages de taux de charge renforçante totale peut s'appliquer à l'un quelconque des modes de réalisation de l'invention.

De préférence, on utilise la silice à un taux allant de 30 à 180 pce, plus préférentiellement de 40 à 180 pce ; et optionnellement du noir de carbone. Le noir de carbone, lorsqu'il est présent, est utilisé de préférence à un taux inférieur à 50 pce, plus préférentiellement compris dans un domaine allant de 0,1 à 50 pce, plus préférentiellement de 0,1 à 30 pce, notamment de 0,1 à 10 pce, voire de 0,1 à 5 pce.

Selon un mode de réalisation particulier de l'invention, la silice représente plus de 50% en poids du poids total de la charge renforçante de la composition de caoutchouc. On dit alors que la silice est majoritaire ou est la charge renforçante majoritaire.

Lorsqu'il est combiné à de la silice à titre de charge renforçante majoritaire, le noir de carbone est utilisé de préférence à un taux inférieur à 20 pce, plus préférentiellement inférieur à 10 pce (par exemple de 0,1 à 10 pce, notamment de 0,1 à 5 pce ou de 0.5 à 20 pce, notamment de 2 à 10 pce). Dans les intervalles indiqués, on bénéficie des propriétés colorantes (agent de pigmentation noire) et anti-UV des noirs de carbone, sans pénaliser par ailleurs les performances typiques apportées par la silice.

L'homme du métier comprendra qu'en remplacement de la silice décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack^{®} » de la série CRX2000 » ou de la série « CRX4000 » de la société Cabot Corporation.

Pour coupler la charge inorganique renforçante à l'élastomère, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

Lorsqu'un agent de couplage est utilisé, sa teneur est avantageusement inférieure à 20 pce, étant entendu qu'il est en général souhaitable d'en utiliser le moins possible. Typiquement le taux d'agent de recouvrement représente de 0,5% à 15% en poids par rapport à la quantité de charge inorganique. Son taux est préférentiellement compris entre 0 et 12 pce. Ce taux est aisément ajusté par l'homme du métier selon le taux de charge inorganique utilisé dans la composition.

Il est connu de l'homme du métier d'utiliser dans des compositions de caoutchouc au moins un agent de recouvrement de la charge inorganique renforçante. De tels agents sont susceptibles de manière connue, grâce à une amélioration de la dispersion de la charge dans la matrice de caoutchouc et à un abaissement de la viscosité des compositions, d'améliorer leur faculté de mise en oeuvre à l'état cru. A titre d'agent de recouvrement de la silice on peut citer les silanes hydroxylés ou hydrolysables, les polyols non aromatiques, les polyéthers, les amines, les polysiloxanes hydroxylés ou hydrolysables, les dérivés guanidiques, les hydroxydes de métaux alcalins ou alcalino-terreux et les mélanges de tels composés ; parmi de tels composés on peut citer encore la diphénylguanidine ou l'octadécylamine.

Selon une variante préférentielle de l'invention, la composition de caoutchouc ne comprend pas un tel agent de recouvrement. Ainsi, selon cette variante la composition de caoutchouc selon l'invention est dépourvue d'un tel agent de recouvrement ou contient moins de 1 pce d'un tel agent de recouvrement, de préférence moins de 0,5 pce et plus préférentiellement moins de 0,2 pce. Tout particulièrement, la composition de caoutchouc selon l'invention est dépourvue ou contient moins de 1 pce d'un agent choisis parmi les silanes hydroxylés ou hydrolysables, les polyols non-aromatiques, les polyéthers, les amines, les polysiloxanes hydroxylés ou hydrolysables, les dérivés guanidiques, les hydroxydes de métaux alcalins ou alcalino-terreux et les mélanges de tels composés; parmi de tels composés on peut citer encore la diphénylguanidine ou l'octadécylamine. Plus particulièrement encore la composition de caoutchouc selon l'invention est dépourvue ou contient moins de 1 pce de diphénylguanidine.

Cette variante préférentielle permet d'optimiser encore plus significativement les propriétés d'extensométrie de la composition selon l'invention.

### 1.4. Résine terpène phénolique

Selon l'invention, à l'élastomère diénique portant des fonctions carbonates présentes chacune dans un cycle 1,3-dioxolan-2-one, au système de réticulation et à la charge renforçante précédemment décrits est associée une résine terpène phénolique majoritairement composée d'unités issues de monomères terpènes et de monomères phénoliques.

Par "terpène", polymère de l'isoprène (C₅H₈), on entend le mono-terpène (C₁₀H₁₆), le sesqui-terpene (C₁₅H₂₄), le di-terpene (C₂₀H₃₂) et autre de même nature, ainsi que leurs mélanges. Plus particulièrement, le terme "terpène", regroupe ici de manière connue les monomères alpha-pinène, .beta-pinène, dipentène, limonène, myrcène, allo-ocimène, ocimène, alpha-phellandrène, alpha-terpinène, gamma-terpinène, terpinolène, 1,8-cineol, 1,4-cineol, alpha-terpinéol, beta-terpinéol, gamma-terpinéol, camphène, tricyclène, sabinène, paramentadiènes, carènes et autres de mêmes nature, ainsi que leurs mélanges.

Par monomère phénolique, on entend de manière connue, le phénol ou tout monomère dérivé du phénol polymérisable avec un terpène. A titre d'exemple, on peut citer le phénol, le bisphénol A, le crésol, le xylénol et d'autres de même nature, ainsi que leurs mélanges.

De préférence le monomère phénolique est le phénol.

La résine terpène phénolique majoritairement composée d'unités issues de monomères terpènes et phénoliques, peut comprendre, en plus de ces unités, et à titre minoritaire, des unités aliphatiques, ou des unités aromatiques ou encore des unités du type aliphatique/ aromatique, c'est-à-dire à base de monomères aliphatiques et/ou aromatiques, autres que terpènes et phénols. Ce type de résine est décrit dans le document WO2010/144890.

Le taux de résine terpène phénolique dans la composition selon l'invention est de préférence d'au moins 0,5 pce, de préférence d'au moins 5 pce. Le taux de résine terpène phénolique dans la composition selon l'invention est de préférence d'au plus 50 pce, plus préférentiellement d'au plus 20 pce. De préférence encore le taux de résine terpène phénolique dans la composition selon l'invention est compris dans un domaine allant de 5 pce à 20 pce. En effet, en dessous de 0,5 pce de cette résine utile aux besoins de l'invention, l'effet de cette résine pourrait ne pas être suffisant et les propriétés d'extensométrie de la composition pourraient ne pas être satisfaisantes, tandis qu'au-dessus de 50 pce la composition pourrait présenter une difficulté de fabrication pour incorporer facilement toute la résine dans la composition.

La composition de caoutchouc peut aussi contenir un ou plusieurs élastomères diéniques autres que l'élastomère utile aux besoins de l'invention. Un autre élastomère diénique est alors très préférentiellement un élastomère diénique époxydé.

Selon l'un quelconque des modes de réalisation de l'invention, la composition de caoutchouc comprend préférentiellement plus de 50 pce, plus préférentiellement 75 pce de l'élastomère diénique utile aux besoins de l'invention, comprenant des unités d'un monomère 1,3-diène et portant des fonctions carbonates présentes chacune dans un cycle 1,3-dioxolan-2-one. Le complément à 100 pce est alors très préférentiellement constitué d'un ou de plusieurs élastomères diéniques.

Selon l'un quelconque des modes de réalisation de l'invention, la composition de caoutchouc comprend préférentiellement 100 pce de l'élastomère diénique utile aux besoins de l'invention comprenant des unités d'un monomère 1,3-diène et portant des fonctions carbonates présentes chacune dans un cycle 1,3-dioxolan-2-one,.

Par élastomère diénique utile aux besoins de l'invention, on entend un ou plusieurs élastomères diéniques comprenant des unités d'un monomère 1,3-diène et portant des fonctions carbonates présentes chacune dans un cycle 1,3-dioxolan-2-one. L'utilisation de l'expression « élastomère diénique comprenant des unités d'un monomère 1,3-diène et portant des fonctions carbonates présentes chacune dans un cycle 1,3-dioxolan-2-one» au singulier s'entend comme la somme des élastomères diéniques comprenant des unités d'un monomère 1,3-diène et portant des fonctions carbonates présentes chacune dans un cycle 1,3-dioxolan-2-one présents dans la composition selon l'invention.

### 1.5. Autres additifs

La composition de caoutchouc conforme à l'invention peut comporter également tout ou partie des additifs usuels habituellement utilisés dans les compositions d'élastomères destinées à constituer des mélanges d'articles finis en caoutchouc tels que des pneus, comme par exemple des plastifiants ou des huiles d'extension autres que ceux décrits plus haut, des pigments, des agents de protection tels que cires anti-ozone, anti-ozonants chimiques, anti-oxydants.

De manière préférentielle, les compositions de caoutchouc de l'invention sont dépourvues de système de réticulation autre que celui décrit précédemment, et qui comporte un composé polyamine. Dit autrement, le système de réticulation à base d'au moins un composé polyamine est préférentiellement le seul système de réticulation dans la composition de caoutchouc de l'invention. De préférence, les compositions de l'invention sont dépourvues de système de vulcanisation, ou contiennent moins de 1 pce de soufre, de préférence moins de 0,5 pce et plus préférentiellement moins de 0,2 pce. La composition est préférentiellement dépourvue de tout accélérateur de vulcanisation, tels qu'ils sont connus de l'homme du métier, ou en contient moins de 1 pce, de préférence moins de 0,5 pce et plus préférentiellement moins de 0,2 pce.

### 1.6. Préparation des compositions de caoutchouc

La composition de caoutchouc conforme à l'invention est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

L'élastomère utile aux besoins de l'invention est généralement introduit au cours de la phase dite non productive pour être malaxé thermo mécaniquement avec la charge renforçante et la résine terpène phénolique, et éventuellement les autres ingrédients à l'exception du système de réticulation.

La composition de caoutchouc peut être préparée par un procédé qui comprend les étapes suivantes :
- incorporer à l'élastomère, au cours d'une première étape dite non productive, la résine terpène phénolique, la charge renforçante, le cas échéant un agent de couplage ou un agent de recouvrement, en malaxant thermo mécaniquement jusqu'à atteindre une température maximale comprise entre 130 et 180°C,
- refroidir l'ensemble à une température inférieure à 100°C,
- incorporer ensuite un système de réticulation,
- malaxer le tout jusqu'à une température maximale inférieure à 120°C.

La composition finale ainsi obtenue peut ensuite être calandrée, par exemple sous la forme d'une feuille ou d'une plaque, notamment pour une caractérisation au laboratoire, ou encore extrudée, pour former par exemple un profilé de caoutchouc utilisé comme composant caoutchouteux pour la confection du pneu.

La composition de caoutchouc conforme à l'invention, peut être soit à l'état cru (avant réticulation), soit à l'état cuit (après réticulation). Elle est utilisée préférentiellement dans un pneu.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES

### II.1-Mesures et tests utilisés :

### II.1.a - Chromatographie d'exclusion stérique (SEC) :

La chromatographie d'exclusion stérique (ou Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE. Il n'y a pas de traitement particulier de l'échantillon de polymère avant analyse. Celui-ci est simplement solubilisé, dans une solution de tétrahydrofurane contenant 1 % en volume de diisopropylamine, 1 % en volume de triéthylamine et 1 % en volume d'eau distillée, à une concentration d'environ 1 g/l. Puis, la solution est filtrée sur filtre de porosité 0,45 µm avant injection. L'appareillage utilisé est un chromatographe « WATERS alliance ». Le solvant d'élution est du tétrahydrofurane contenant 1 % en volume de diisopropylamine et 1 % en volume de triéthylamine. Le débit est de 0,7 ml/min, la température du système est de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ». Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER ». Les masses molaires moyennes calculées sont relatives à une courbe d'étalonnage réalisée à partir de polystyrènes étalons commerciaux « PSS READY CAL-KIT ».

### II.1.b -Spectroscopie de résonance magnétique nucléaire (RMN)

Les déterminations des taux de fonctions carbonates sur la chaîne polymère sont réalisées par une analyse RMN. Les spectres sont acquis sur un spectromètre 500 MHz BRUKER équipé d'une sonde « large bande » BBIz-grad 5 mm. L'expérience RMN ¹H quantitative, utilise une séquence simple impulsion 30° et un délai de répétition de 3 secondes entre chaque acquisition. Les échantillons sont solubilisés dans le chloroforme deutéré.

Le spectre RMN ¹H permet de quantifier le taux de fonction carbonate incorporée au sein de la chaîne par intégration des signaux caractéristiques des protons des motifs unités. L'abréviation MCA désigne l'unité monomère de formule (IV-u), PB1,2 et PB1,4 les unités monomères du 1,3-butadiène inséré dans la chaîne par addition 1,2 et 1,4 respectivement. 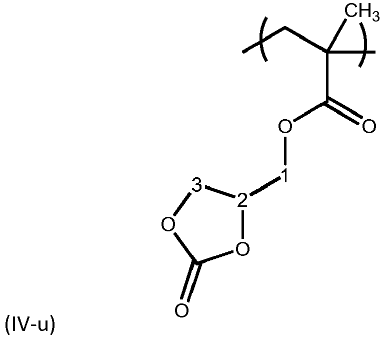
4H correspondant au CH₂ n°1 MCA + CH₂ n°3 MCA : de 3,3 à 4,5 ppm
2H+1H correspondant au PB1,2 + CH n°2 MCA : de 4,5 à 4,9 ppm
2H+1H correspondant au PB1,4 + PB1,2 : de 4,9 à 5,8 ppm
5H Motif Styrène : 7.41ppm à 6.5ppm.

### II.1.c - Essais de traction :

Ces essais permettent de déterminer les contraintes d'élasticité et les propriétés à la rupture après cuisson. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 50%, 100% et 300% d'allongement notés respectivement MSA50, MSA100 et MSA300. Toutes ces mesures de traction sont effectuées dans les conditions normales de température et d'hygrométrie (à23°C +- 2°C et à 100°C ± 2°C ; 50 +- 5% d'humidité relative).

Les contraintes à la rupture (en MPa) et les allongements à la rupture (en %) sont mesurés à 23°C ± 2°C et à 100°C ± 2°C, selon la norme NF T 46-002 de 1988.

### II.2-Synthèse du polymère et préparation des compositions:

### II.2.a - Réactifs

Dans l'ensemble des exemples mentionnés ci-dessous, le dodécylsulfate de sodium, le sulfate de fer, l'hydroperoxyde de cumène, le pyrophosphate de sodium, le persulfate de potassium, le terdodécylmercaptan, la N, N-diéthylhydroxylamine, le résorcinol, l'hydrogénophosphate de sodium et le dihydrogénophosphate d'ammonium sont commercialisés par Aldrich.

Le méthacrylate de 4-(hydroxyméthyl)-1,3-dioxolan-2-one provient de chez Spécifie Polymers.

Le styrène et le butadiène sont purifiés par passage sur garde d'alumine et par barbotage à l'azote.

### II.2.b. - Synthèse du terpolymère de styrène, butadiène et de méthacrylate de 4-(hydroxyméthyl)-1,3-dioxolan-2-one (CCMA) par polymérisation à froid

### Préparation ou préalable suivantes :

- Suspension dans l'eau de Na2FeP2O7 à 0,0627 mol/L : le FeSO4, 7H2O et le Na4P2O7 sont dilués dans de l'eau barbotée, puis le mélange est chauffé à 60°C pendant 45 minutes en agitant régulièrement
- Préparation d'une solution d'hydroperoxyde de cumène dans le styrène à 0,079 mol/L
- Préparation d'une solution de mercaptan (R-SH) dans le styrène à 0,223 mol/L
- Préparation d'une solution de N,N-diéthylhydroxylamine dans l'eau à 10 g/L

On charge le réacteur selon les opérations suivantes :
- introduire l'eau barbotée pendant une demi-heure à 25°C (volume final 22,3 mL)
- puis le dodécylsulfate de sodium (SDS) sous azote à 25°C suivi d'un balayage à l'azote de 10 min (0,3 g)
- injecter la charge de styrène contenant le R-SH à 25°C sous azote (1 mL de solution à 0,223 mol/L)
- refroidir le réacteur pour atteindre 5°C
- quand le réacteur atteint environ 12°C, injecter le reste de styrène (1,815 mL, 1.65 g) et le CCMA (0,39 mL, 0,56g), sous azote
- injecter alors la charge de butadiène (9,88 mL, 6,42 g)
- laisser refroidir le réacteur jusqu'à 5°C, puis injecter la solution de Na2FeP2O7 (1,7 mL de solution à 0,0627 mol/L)
- attendre 5 minutes, puis injecter l'amorceur, la solution d'hydroperoxyde de cumène dans le styrène (0,5 mL)

La fin de l'ajout de l'amorceur marque le début de la polymérisation (soit t=0 min).

L'agitation est maintenue à 5°C durant 7 h 15 pour atteindre environ 63 % de conversion finale (.

Enfin, une solution de stoppage de N,N-diéthylhydroxylamine dans l'eau est préparée. Le latex est alors stoppé par transvasement par pression résiduelle des monomères sur cette solution de stoppage. Le latex est ensuite coagulé par addition de 50 mL d'acétone. Le coagulum est séché sous vide partiel et sous balayage d'azote pendant 48 h à 40°C.

Les conditions opératoires sont répertoriées dans le tableau 1 suivant:

**Tableau 1:**

| | | |
|---|---|---|
| Eau | | 22.3 mL |
| SDS | 3 pce | 0.3 g |
| RSH | 0,16 pce | 0.016 g |
| FeSO₄, 7H₂O | 0,28 pce | 0.028 g |
| Na₄P₂O₇ | 0,266 pce | 0.026 g |
| %_{massique} Styrène (%ₘₒₗ) | 30,14% (19%) | 3.014 g |
| %_{massique} Butadiène (%ₘₒₗ) | 64.23% (79%) | 6.42 g |
| %_{massique} CCMA (%ₘₒₗ) | 5,63% (2%) | 0.56 g |
| Hydroperoxide de cumène | 0,17 pce | 0.017 g |
| N, N-diéthylhydroxylamine | 0,1 pce | 0.01g |

Le polymère obtenu a été caractérisé par les analyses RMN et SEC. Les résultats des caractérisations figurent dans le tableau 2.

**Tableau 2:**

| Polymère | caractérisation SEC | Caractérisation RMN | | |
|---|---|---|---|---|
| | Mn (Kg/mol) | carbonate % ₘₒₗₐᵢᵣₑ | Styrène % ₘₒₗₐᵢᵣₑ | Butadiène %ₘₒₗₐᵢᵣₑ |
| | 83 | 2,6 | 16.2 | 81,2 |

### II.2.c - Préparation et caractérisation des compositions de caoutchouc :

Pour préparer les compositions E1 à E3 selon l'invention et C1 à C3 à titre de contre-exemples, on procède pour les essais qui suivent de la manière suivante.

La silice a été introduite à iso fraction volumique dans chaque mélange pour que les comparaisons soient bien analytiques, le taux d'agent de recouvrement et d'agent de couplage a été adapté en conséquence.

La marche de mélangeage suivie pour la **composition témoin C1** est la suivante :
Dans un mélangeur interne de type Haake, la matrice est mélangée pendant 1min. Les deux tiers de la silice, la DPG et le silane sont ensuite ajoutés. Après 1min de mélangeage, le reste de la silice, la 6PPD, la paraffine, l'acide stéarique et la résine sont introduits. Après 1min, l'oxyde de zinc est incorporé au mélange. Le tout est ensuite mélangé pendant 1min. Un coup de pilon est ensuite réalisé et le mélange est tombé à une température d'environ 145°C après 4min30 de mélangeage.

Le matériau ainsi obtenu est refroidi sur outil à cylindres, le soufre et la CBS sont incorporés, puis, 12 passes portefeuille sont réalisées afin d'homogénéiser le mélange.

La marche de mélangeage suivie pour les autres **compositions E1, E2, E3 et C2, C3** est la suivante:
Dans un mélangeur interne de type Haake, la matrice est mélangée pendant 1min. Les deux tiers de la silice et le silane sont ensuite ajoutés. Après 1min de mélangeage, le reste de la silice ainsi que de la DPG et de la résine terpène phénolique (si présentes) sont introduits. Après 1min, la polyamine est incorporée au mélange. Le tout est ensuite mélangé pendant 1min. Un coup de pilon est ensuite réalisé et le mélange est tombé à une température d'environ 145°C après 4min30 de mélangeage.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques. Les compostions calandrées sont ensuite cuites sous presse pendant 30 min à 150°C, puis caractérisées. Les matériaux sont ensuite évalués en propriétés de caoutchouterie.

Les compositions de caoutchouc sont données dans le tableau 3 suivant. Les quantités sont exprimées en parties pour 100 parties en poids d'élastomère.

**Tableau 3:**

| composants | C1 | C2 | C3 | E1 | E2 | E3 |
|---|---|---|---|---|---|---|
| | Contre-exemple 1 | Contre-exemple 2 | Contre- exemple 3 | Exemple 1 | Exemple 2 | Exemple 3 |
| | Composition témoin vulcanisation | Composition sans DPG et sans résine terpène phénolique | Composition avec DPG et résine terpène phénolique | Composition sans DPG et avec résine terpène phénolique | Composition sans DPG et avec résine terpène phénolique | Composition avec DPG et avec résine terpène phénolique |
| SBR-carbonate (1) | 100 | 100 | 100 | 100 | 100 | 100 |
| Silice (2) | 73 | 50 | 51 | 54 | 53 | 56 |
| Silane (3) | 5.86 | 4 | 4.1 | 4.4 | 4.24 | 4.5 |
| Résine (4) | 31 | | | | | |
| 6 PPD (5) | 3 | | | | | |
| Paraffine | 1 | | | | | |
| DPG (6) | 2.5 | | 6 | | | 6 |
| Oxyde de Zinc (7) | 0,9 | | | | | |
| Acide stéarique (8) | 3 | | | | | |
| polyamine (9) | | 6.56 | 6.56 | 6.56 | 6.56 | 6.56 |
| Résine terpène phénolique (10) | | | | 10.4 | 7.8 | 10.4 |
| soufre soluble | 1 | | | | | |
| CBS (11) | 2,3 | | | | | |

| | | | | | | |
|---|---|---|---|---|---|---|
| *1 SBR fonctionnalisé carbonate synthétisé plus haut* *2.Silice « Zeosil 1165MP » (Rhodia)* *3.Silane liquide « Si69 » (Degussa)* *4.Résine dicyclopentadiène C9 hydrogénée E5600 BR, Exxon Mobil* *5 « Santoflex 6PPD » (Solutia)* *6 « diphenylguanidine »* *7 « oxyde de zinc » (Umicore)* *8 « Pristerene 4031 » (Uniquema)* *9 Agent de réticulation diamine « Jeffamine ED-600 » (Sigma-Aldrich)* *10 Résine terpène phénolique « SYLVARES TP2040 » (Kraton)* 11 *« Santocture CBS » (Flexys)* | | | | | | |

Les compositions E1 et E2 se différencient de la composition C1 en ce que la composition C1 contient en tant que système de réticulation un système de vulcanisation classique au soufre comprenant des accélérateurs (DPG et CBS), des activateurs (ZnO et acide stéarique, et éventuellement des retardateurs de vulcanisation, alors que les compositions E1 et E2 contiennent un système de réticulation selon l'invention à base d'une polyamine.

On rappelle que la silice a été introduite à iso fraction volumique dans chaque mélange pour que les comparaisons soient bien analytiques. La composition C1 est formulée pour compenser le taux massique de silice plus élevé avec les taux de plastifiant (paraffine et résine).

Les compositions E1 et E2 se différencient de la composition C2 en ce que la composition C2 contient un système de réticulation comprenant un composé polyamine mais ne contient pas de résine terpène phénolique.

Les résultats sont donnés en base 100 par rapport au témoin et figurent dans les tableaux 4 et 5.

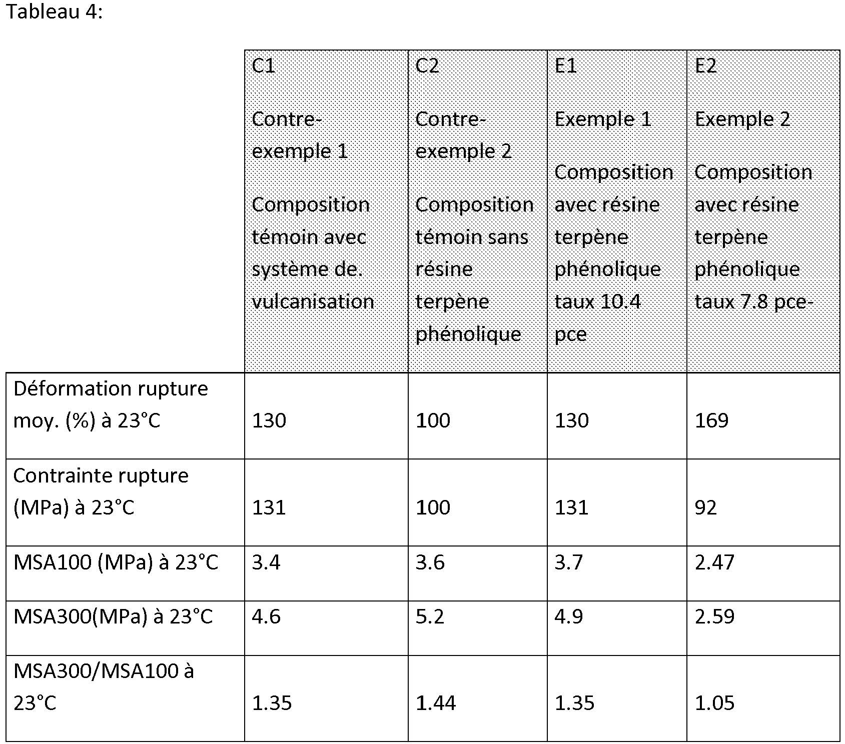

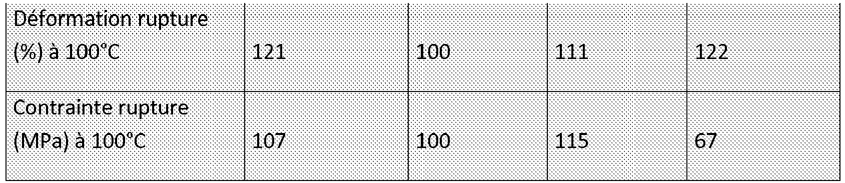

On note dans les compositions de l'invention que le remplacement du système de vulcanisation classique par un système de réticulation à base d'un composé polyamine en présence de résine terpène phénolique permet de maintenir les propriétés d'extensométrie avec un bon niveau de rigidité et de renforcement, et, dans certains cas, permet d'obtenir un gain en déformation rupture.

On note également le caractère surprenant et inattendu de l'amélioration observée des propriétés d'extensométrie au vu de l'ajout d'une résine terpène phénolique à la composition contenant un système de réticulation à base d'un composé polyamine.

Ainsi, l'utilisation d'un système de réticulation à base d'un composé polyamine dans une composition contenant un élastomère diénique portant des fonctions carbonates présentes chacune dans des cycles 1,3-dioxolan-2-one, permet en présence de résine terpène phénolique de simplifier le système de réticulation et confère à la composition de bonnes propriétés d'extensométrie tout en maintenant un bon niveau de renforcement et de rigidité.

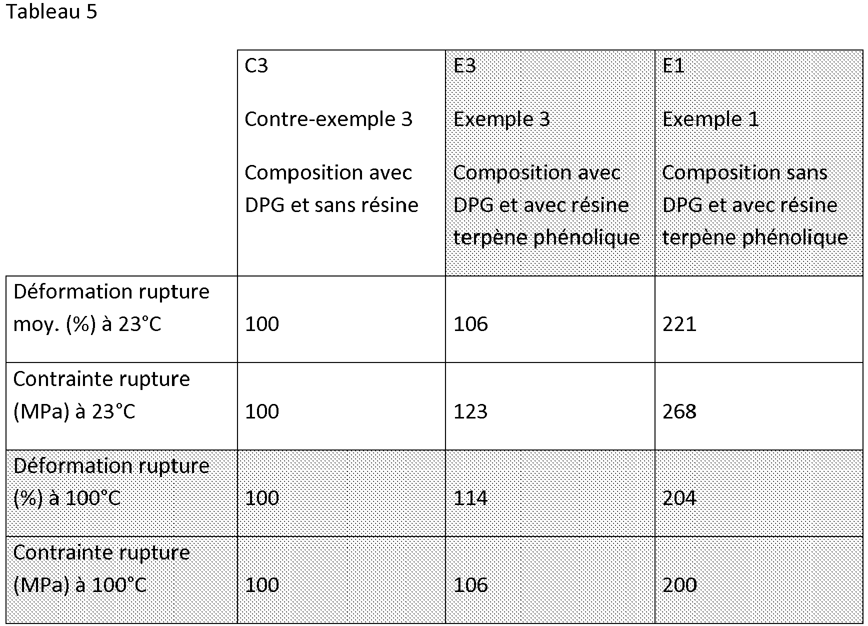

En comparant les composition E1 et E3 à la composition témoin C3, on constate l'amélioration des propriétés d'extensométrie à l'ajout d'une résine terpène phénolique à la composition contenant un système de réticulation à base d'un composé polyamine ainsi qu'un agent de recouvrement classique de type diphénylguanidine.

On note également le caractère surprenant et inattendu de l'amélioration significative observée des propriétés d'extensométrie au vu de la suppression d'un agent de recouvrement classique, en l'occurrence la diphényl guanidine, en présence d'une résine terpène phénolique à la composition contenant un système de réticulation à base d'un composé polyamine.

Ainsi, l'utilisation d'un système de réticulation à base d'un composé polyamine dans une composition contenant un élastomère diénique portant des fonctions carbonates présentes chacune dans des cycles 1,3-dioxolan-2-one et étant dépourvue d'un agent de recouvrement de la silice, permet, en présence d'une résine terpène phénolique, de simplifier le système de réticulation et confère à la composition des propriétés d'extensométrie significativement améliorées par rapport à une composition selon l'invention qui contient un agent de recouvrement de la silice.

## Revendications

1. Composition de caoutchouc contenant au moins
- une charge renforçante comprenant de la silice,
- un élastomère comprenant des unités d'un monomère 1,3-diène et portant des fonctions carbonates présentes chacune dans un cycle 1,3-dioxolan-2-one,
- un système de réticulation comprenant un composé polyamine, et
- une résine terpène phénolique.

2. Composition selon la revendication 1 dans laquelle les fonctions carbonates sont pendantes situés en dehors des extrémités de chaîne de l'élastomère.

3. Composition selon l'une quelconque des revendications précédentes, dans laquelle le taux de fonction carbonate est compris entre 0.1 et 20 moles pour 100 moles d'unités monomères constituant l'élastomère.

4. Composition selon l'une quelconque des revendications précédentes, dans laquelle le monomère 1,3-diène est le 1,3-butadiène, l'isoprène ou leur mélange, de préférence le 1,3-butadiène.

5. Composition selon l'une quelconque des revendications précédentes dépourvue d'agent de recouvrement de la silice.

6. Composition selon l'une quelconque des revendications précédentes, dans laquelle le composé polyamine comprend au moins deux fonctions amines et deux fonctions amines du composé polyamine sont liées entre elles par un groupement hydrocarboné aliphatique ou aromatique ou groupement hydrocarboné en partie aliphatique et aromatique, éventuellement interrompu par un ou plusieurs hétéroatomes et dont les fonctions amines sont primaires ou secondaires, de préférence des fonctions amines primaires.

7. Composition selon la revendication 6, dans laquelle le groupement hydrocarboné liant deux fonctions amines du composé polyamine est un oligomère ayant une masse moyenne en nombre Mn d'au plus 1500g/mol, plus préférentiellement d'au plus 1000 g/mol.

8. Composition selon la revendication 6 ou 7, dans laquelle le composé polyamine comprend deux fonctions amines.

9. Composition selon l'une quelconque des revendications précédentes, dans laquelle le composé polyamine est présent selon un taux allant de 0,2 à 20 pce.

10. Composition selon l'une quelconque des revendications précédentes, dans laquelle le composé polyamine répond à la formule générale VI
RRN--- A --- NRR
dans laquelle
A représente un groupement hydrocarboné comportant au moins 1 atome de carbone, éventuellement substitué et éventuellement interrompu par un ou plusieurs hétéroatomes,
les R représentent, indépendamment l'un de l'autre, un atome d'hydrogène ou un groupement alkyle comportant au moins 1 atome de carbone.

11. Composition selon l'une quelconque des revendications précédentes, dans laquelle la charge renforçante comprend plus de 50% en poids de silice.

12. Composition selon l'une quelconque des revendications précédentes, dans laquelle la résine terpène phénolique est une résine composée majoritairement d'unités issues de monomères terpènes et phénols.

13. Composition selon l'une quelconque des revendications précédentes, dans laquelle la résine terpène phénolique est présent selon un taux d'au moins 0,5 pce et d'au plus 50 pce.

14. Pneu qui comprend une composition de caoutchouc définie à l'une quelconque des revendications précédentes.

## Patentansprüche

1. Kautschukzusammensetzung, mindestens enthaltend
- einen verstärkenden Füllstoff, der Kieselsäure umfasst,
- ein Elastomer, das Einheiten eines 1,3-Dienmonomers umfasst und Carbonatfunktionen trägt, die jeweils in einem 1,3-Dioxolan-2-on-Ring vorliegen,
- ein Vernetzungssystem, das eine Polyaminverbindung umfasst, und
- ein Terpenphenolharz.

2. Zusammensetzung nach Anspruch 1, wobei die Carbonatfunktionen seitenständig sind und sich außerhalb der Enden der Elastomerkette befinden.

3. Zusammensetzung nach einem der vorhergehenden Ansprüche, wobei der Gehalt an Carbonatfunktion zwischen 0,1 und 20 mol pro 100 mol Monomereinheiten, aus denen das Elastomer aufgebaut ist, liegt.

4. Zusammensetzung nach einem der vorhergehenden Ansprüche, wobei es sich bei dem 1,3-Dienmonomer um 1,3-Butadien, Isopren oder eine Mischung davon, vorzugsweise 1,3-Butadien, handelt.

5. Zusammensetzung nach einem der vorhergehenden Ansprüche, die frei von einem Mittel zur Bedeckung der Kieselsäure ist.

6. Zusammensetzung nach einem der vorhergehenden Ansprüche, wobei die Polyaminverbindung mindestens zwei Aminfunktionen umfasst und zwei Aminfunktionen der Polyaminverbindung über eine aliphatische oder aromatische Kohlenwasserstoffgruppe oder eine teilweise aliphatische und aromatische Kohlenwasserstoffgruppe, die gegebenenfalls durch ein oder mehrere Heteroatome unterbrochen ist und deren Aminfunktionen primär oder sekundär, vorzugsweise primär, sind, miteinander verbunden sind.

7. Zusammensetzung nach Anspruch 6, wobei es sich bei der Kohlenwasserstoffgruppe, die zwei Aminfunktionen der Polyaminverbindung verbindet, um ein Oligomer mit einer zahlenmittleren Masse Mn von höchstens 1500 g/mol, weiter bevorzugt höchstens 1000 g/mol, handelt.

8. Zusammensetzung nach Anspruch 6 oder 7, wobei die Polyaminverbindung zwei Aminfunktionen umfasst.

9. Zusammensetzung nach einem der vorhergehenden Ansprüche, wobei die Polyaminverbindung in einem Gehalt im Bereich von 0,2 bis 20 phe vorliegt.

10. Zusammensetzung nach einem der vorhergehenden Ansprüche, wobei die Polyaminverbindung der allgemeinen Formel VI entspricht:
RRN---A---NRR
wobei
A für eine Kohlenwasserstoffgruppe mit mindestens 1 Kohlenstoffatom steht, die gegebenenfalls substituiert und gegebenenfalls durch ein oder mehrere Heteroatome unterbrochen ist,
die Reste R unabhängig voneinander für ein Wasserstoffatom oder eine Alkylgruppe mit mindestens 1 Kohlenstoffatom stehen.

11. Zusammensetzung nach einem der vorhergehenden Ansprüche, wobei der verstärkende Füllstoff mehr als 50 Gew.-% Kieselsäure umfasst.

12. Zusammensetzung nach einem der vorhergehenden Ansprüche, wobei das Terpenphenolharz hauptsächlich aus Einheiten, die sich von Terpen- und Phenol-Monomeren ableiten, besteht.

13. Zusammensetzung nach einem der vorhergehenden Ansprüche, wobei das Terpenphenolharz in einem Gehalt von mindestens 0,5 phe und höchstens 50 phe vorliegt.

14. Reifen, der eine Kautschukzusammensetzung gemäß einem der vorhergehenden Ansprüche umfasst.

## Claims

1. Rubber composition containing at least:
- a reinforcing filler comprising silica,
- an elastomer comprising units of a 1,3-diene monomer and bearing carbonate functions that are each present in a 1,3-dioxolan-2-one ring,
- a crosslinking system comprising a polyamine compound, and
- a terpene phenolic resin.

2. Composition according to Claim 1, in which the carbonate functions are pendent, located outside the ends of the elastomer chain.

3. Composition according to either one of the preceding claims, in which the content of carbonate function is between 0.1 and 20 mol per 100 mol of monomer units constituting the elastomer.

4. Composition according to any one of the preceding claims, in which the 1,3-diene monomer is 1,3-butadiene, isoprene or the mixture thereof, preferably 1,3-butadiene.

5. Composition according to any one of the preceding claims, free of an agent for covering the silica.

6. Composition according to any one of the preceding claims, in which the polyamine compound comprises at least two amine functions and two amine functions of the polyamine compound are bonded together by an aliphatic or aromatic hydrocarbon group or a partially aliphatic and aromatic hydrocarbon group, optionally interrupted by one or more heteroatoms and the amine functions of which are primary or secondary, preferably primary, amine functions.

7. Composition according to Claim 6, in which the hydrocarbon group bonding two amine functions of the polyamine compound is an oligomer having a number-average molecular mass Mn of at most 1500 g/mol, more preferentially of at most 1000 g/mol.

8. Composition according to Claim 6 or 7, in which the polyamine compound comprises two amine functions.

9. Composition according to any one of the preceding claims, in which the polyamine compound is present at a content ranging from 0.2 to 20 phr.

10. Composition according to any one of the preceding claims, in which the polyamine compound corresponds to the general formula VI:
R R N--- A ---N R R
in which:
A represents a hydrocarbon group comprising at least 1 carbon atom, which is optionally substituted and optionally interrupted by one or more heteroatoms,
the R symbols represent, independently of one another, a hydrogen atom or an alkyl group comprising at least 1 carbon atom.

11. Composition according to any one of the preceding claims, in which the reinforcing filler comprises more than 50% by weight of silica.

12. Composition according to any one of the preceding claims, in which the terpene phenolic resin is a resin composed predominantly of units derived from terpene and phenol monomers.

13. Composition according to any one of the preceding claims, in which the terpene phenolic resin is present at a content of at least 0.5 phr and of at most 50 phr.

14. Tire which comprises a rubber composition defined in any one of the preceding claims.
